# EUROPÄISCHE PATENTSCHRIFT

(11) **EP 4 251 450 B1**
(45) Veröffentlichungstag und Bekanntmachung des Hinweises auf die Patenterteilung: **31.01.2024**
(21) Anmeldenummer: 21798315.4
(22) Anmeldetag: 18.10.2021
(51) Int. Cl.: B60K 6/40, B60K 6/48, B60K 6/36, B60K 6/387

(54) **HYBRIDGETRIEBE FÜR EIN FAHRZEUG**
HYBRID GEARBOX FOR A VEHICLE
BOÎTE DE VITESSES HYBRIDE POUR UN VÉHICULE

(30) Priorität: 30.11.2020 DE 102020007296
(43) Veröffentlichungstag der Anmeldung: 04.10.2023
(60) Teilanmeldung: 23182825.2
(73) Patentinhaber: Mercedes-Benz Group AG, 70372 Stuttgart (DE)
(72) Erfinder: DENGLER, Martin, 71672 Marbach (DE); BAUER, Benjamin, 74369 Löchgau (DE); BECKER, Jan, 71229 Leonberg (DE); BRANDENBURG, Markus, 73730 Esslingen (DE); ERTEL, Andreas, 71404 Korb (DE); HAHN, Peter, 70374 Stuttgart (DE); HAERTER, Tobias, 70174 Stuttgart (DE); MUELLER, Elmar, 71139 Ehningen (DE); WEIGOLD, Jörg, 70327 Stuttgart (DE); MAURER, Timo, 73733 Esslingen (DE); BIRJE, Preetam, Bengaluru 560103 (IN)
(74) Vertreter: Novagraaf Group
(86) Internationale Anmeldenummer: PCT/EP2021/078837
(87) Internationale Veröffentlichungsnummer: WO 2022/111911

(56) Entgegenhaltungen:
- EP-A2- 1 000 790
- DE-A1-102015 014 096
- DE-A1-102016 215 184

## Beschreibung

Die Erfindung betrifft ein Hybridgetriebe für ein Fahrzeug nach der im Oberbegriff von Anspruch 1 näher definierten Art.

Hybridgetriebe für Fahrzeuge sind prinzipiell aus dem Stand der Technik bekannt. Dabei geht es in Wesentlichen immer darum, einen möglichst effizienten und kompakten Aufbau des Getriebes zu erreichen. So beschreibt beispielsweise die DE 10 2010 002 746 A1 die Integration einer elektrischen Maschine samt ihrer Leistungselektronik in ein Hybridgetriebe. Der Aufbau ist dabei so, dass die elektrische Maschine in einer sogenannten Inline-Anordnung eingesetzt wird, also koaxial zur Getriebehauptwelle.

Aus dem weiteren Stand der Technik in Form der DE 10 2018 002 167 B3 ist ein Doppelkupplungsgetriebe für ein Kraftfahrzeug bekannt. Dabei ist es so, dass zur Einsparung von Bauraum eine elektrohydraulische Steuereinheit im Ölraum angeordnet ist. Da diese Elektrohydraulik einerseits aus einer Elektronik und andererseits aus der hydraulischen Getriebesteuerung besteht, ist hier also auch das Getriebesteuergerät, worunter im Allgemeinen die elektrische Steuerung des Getriebes zu verstehen ist, in den Aufbau des Getriebes, hier also in das Getriebegehäuse, mit integriert.

Ferner ist aus der DE 11 2014 001 112 T5 ein Hybridgetriebe bekannt, bei dem eine hydraulische Steuerung sowie eine elektrische Maschine in, beziehungsweise an, einem Gehäuse des Hybridgetriebes angeordnet sind.

Aus der DE 11 2009 000 022 B4 ist ein Hybridgetriebe bekannt, bei dem eine Leistungselektronik einer elektrischen Maschine und ein Getriebe zusammen in einem integrierten Gehäuse angeordnet sind.

Aus der gattungsgemäßen DE 10 2015 014 096 A1 ist ein Hybridgetriebe bekannt, bei welchem eine elektrische Maschine hinsichtlich einer Hochrichtung benachbart und oberhalb einer hydraulischen Getriebesteuerung angeordnet ist. Aus der EP 1 000 790 A2 ist eine Antriebseinheit bekannt, bei welcher eine Leistungselektronik oberhalb einer elektrischen Maschine angeordnet ist.

Trotz dieser Schriften gibt es weiterhin ein großes Optimierungspotenzial hinsichtlich einer möglichst kompakten Bauweise von Hybridgetrieben, insbesondere in ihrer axialen Richtung entlang der Getriebehauptwelle, um eine möglichst kompakte Bauweise und eine hohe Leistungsdichte zu erreichen.

Dementsprechend ist es die Aufgabe der hier vorliegenden Erfindung, ein Hybridgetriebe für ein Fahrzeug mit den Merkmalen im Oberbegriff des Anspruchs 1 dahingehend zu verbessern, dass dieses noch kompakter realisiert werden kann.

Erfindungsgemäß wird dies durch ein Hybridgetriebe mit den Merkmalen im Anspruch 1, und hier insbesondere im kennzeichnenden Teil von Anspruch 1, erreicht. Vorteilhafte Ausgestaltungen und Weiterbildungen des erfindungsgemäßen Hybridgetriebes ergeben sich aus den hiervon abhängigen Unteransprüchen.

Bei dem Hybridgetriebe für ein Fahrzeug ist es wie im Stand der Technik zunächst bekannt so, dass dieses eine in einer Querrichtung verlaufende Getriebeeingangswelle und zumindest eine parallel dazu angeordnete Vorgelegewelle umfasst. Außerdem ist eine Kupplungseinrichtung vorhanden, welche vorzugsweise als Doppelkupplung, als Trennkupplung oder als Kombination hieraus ausgebildet sein kann. Insbesondere umfasst der Aufbau bei der Ausbildung als Doppelkupplung zwei Vorgelegewellen, bei der Ausgestaltung als reine Trennkupplung eine Vorgelegewelle. Des Weiteren ist ein Differentialgetriebe vorgesehen, welches ein Differentialeingangszahnrad aufweist, dessen Drehachse parallel zur Getriebeeingangswelle, also der beim erfindungsgemäßen Aufbau als Querrichtung bezeichneten Richtung, angeordnet ist. Eine elektrische Maschine mit einem Stator und einem Rotor ist ebenfalls so angeordnet, dass die Rotordrehachse parallel zur Getriebeeingangswelle verläuft. Ein Getriebesteuergerät, über welches eine elektronische Getriebesteuerung erzielt wird, ist vorgesehen. In einer Längsrichtung gesehen, welche senkrecht zu der bereits genannten Querrichtung angeordnet ist, ist das Differentialeingangszahnrad, die Getriebeeingangswelle und das Getriebesteuergerät dabei in der genannten Reihenfolge nacheinander angeordnet.

Mit dem Getriebesteuergerät ist ein elektronisches Steuergerät gemeint, mittels welchem eine Aktuatorik für Schalteinheiten eines Radsatzes des Hybridgetriebes angesteuert werden. Bei der Aktuatorik kann es sich auf an sich bekannte Weise um eine hydraulische Aktuatorik oder um eine elektromechanische Aktuatorik oder um eine Mischform aus beidem handeln. Im Falle der hydraulischen Aktuatorik steuert das Getriebesteuergerät zum Beispiel Magnetventile und eine Hydraulikpumpe. Im Falle der elektromechanischen Aktuatorik steuert das Getriebesteuergerät zum Beispiel Stellmotoren. Vorteilhaft ist das Getriebesteuergerät ferner dazu ausgebildet, auf an sich bekannte Weise ein Schmier- und Kühlsystem des Radsatzes zu steuern. Vorteilhaft kann das Getriebesteuergerät auch dazu ausgebildet sein, ein Kühlsystem der elektrischen Maschine zu steuern.

Ferner ist es auf an sich bekannte Weise so, dass in einer Hochrichtung, welche senkrecht sowohl zu der Querrichtung als auch zu der Längsrichtung angeordnet ist, zumindest ein Teil einer Leistungselektronik für die elektrische Maschine angeordnet ist, und zwar vorteilhaft benachbart zu dem Getriebesteuergerät. Dieser Teil der Leistungselektronik umfasst dabei den konstruktiv größten Teil derselben, in jedem Fall aber eine Platine eines Inverters. Diese Anordnung schafft einen außerordentlich effizienten und kompakten Aufbau. Somit ist eine hohe Systemintegration möglich, welche eine entsprechend hohe Leistungsdichte des erfindungsgemäßen Hybridgetriebes ermöglicht. Außerdem lässt sich ein solcher Aufbau, welcher entsprechend kompakt gestaltet werden kann, hinsichtlich des Packagings ideal an die Bauraumanforderungen bei der Konstruktion des Fahrzeugs anpassen.

Ferner ist auf an sich bekannte Weise vorgesehen, dass die elektrische Maschine in der Hochrichtung benachbart und oberhalb einer hydraulischen Getriebesteuerung und in Längsrichtung überlappend zu dieser angeordnet ist. So lässt sich ein Bauraum, in welchem der Radsatz des Hybridgetriebes mit der Getriebeeingangswelle und der wenigstens einen Vorgelegewelle, die elektrische Maschine, das Steuergerät und die hydraulische Getriebesteuerung angeordnet sind, ideal nutzen, wobei vorzugsweise diese hydraulische Getriebesteuerung in Längsrichtung benachbart zu dem Steuergerät angeordnet ist.

Die hydraulische Getriebesteuerung umfasst dabei zumindest Schaltventile, zum Beispiel Magnetventile, die zur Schaltung von Gangstellern des Radsatzes eingesetzt sind. Vorteilhaft umfasst die hydraulische Getriebesteuerung auch Ventile, die für eine Steuerung eines Schmier- und Kühlsystems des Hybridgetriebes eingesetzt sind. Die hydraulische Getriebesteuerung ist elektrisch mit dem Getriebesteuergerät verbunden.

Mit der Leistungselektronik ist eine an sich bekannte, der elektrischen Maschine zugeordnete Elektronikeinheit gemeint. Die Leistungselektronik dient einer Steuerung der elektrischen Maschine.

Mit dem Radsatz des Hybridgetriebes ist ein Teil des Hybridgetriebes gemeint, der zu einer Bildung unterschiedlicher Getriebegänge, das heißt unterschiedlicher Getriebeübersetzungen, dient. Der Radsatz umfasst zumindest die Eingangswelle, die Vorgelegewellen sowie jeweils koaxial zu diesen Wellen angeordnete Zahnräder und Schalteinheiten.

Das kompakt bauende Hybridgetriebe mit hoher Leistungsdichte ermöglicht für den Fahrzeugrohbau eine optimierte Struktur hinsichtlich der Crashanforderungen, was bei den hohen, insbesondere durch die Traktionsbatterie bedingten Zusatzmassen, in einem solchen Fahrzeug mit dem Hybridgetriebe einen weiteren entscheidenden Vorteil ermöglicht.

Unter einer parallelen Anordnung eines drehbar gelagerten Elementes zu einer Richtung ist zu verstehen, dass eine Drehachse des drehbar gelagerten Elementes parallel zu der Richtung angeordnet ist. Entsprechend ist unter einer parallelen Anordnung zweier drehbar gelagerter Elemente zu verstehen, dass die Drehachsen der beiden Elemente parallel angeordnet sind. Unter einer koaxialen Anordnung zweier anderer drehbar gelagerter Elemente ist zu verstehen, dass die beiden anderen Elemente die gleiche Drehachse haben. Darunter, dass die Kupplungseinrichtung koaxial zu der Getriebeeingangswelle angeordnet ist, ist zu verstehen, dass drehbar gelagerte Kupplungsscheiben oder Kupplungslamellen koaxial zu der Getriebeeingangswelle angeordnet sind.

Erfindungsgemäß ist vorgesehen, dass ein Teil der Leistungselektronik sich in Längsrichtung erstreckt und in Hochrichtung oberhalb der elektrischen Maschine angeordnet ist. Die Leistungselektronik ist in diesem Fall also beim Blick in der Querrichtung auf den Aufbau im Wesentlichen L-förmig ausgebildet und liegt teilweise benachbart, vorzugsweise oberhalb, des Getriebesteuergeräts und teilweise oberhalb der elektrischen Maschine, sodass die Leistungselektronik diese teilweise umschließt und somit noch effizienter in den bestehenden Bauraum integriert werden kann.

Gemäß einer außerordentlich günstigen Weiterbildung des erfindungsgemäßen Hybridgetriebes ist der zumindest eine Teil der Leistungselektronik dabei im bestimmungsgemäßen Einsatz in der Hochrichtung oberhalb des Getriebesteuergeräts angeordnet. Dieser Aufbau ermöglicht eine weitere Optimierung. Das Getriebesteuergerät kann dabei im Getriebeöl angeordnet sein, die Leistungselektronik liegt dann oberhalb des Getriebesteuergeräts vorzugsweise benachbart zu der elektrischen Maschine in Längsrichtung gesehen.

Die Leistungselektronik kann dabei gemäß einer außerordentlich günstigen Weiterbildung des erfindungsgemäßen Hybridgetriebes in der Längsrichtung und/oder der Querrichtung zumindest teilweise überlappend zu dem Getriebesteuergerät angeordnet werden. Hierdurch lässt sich weiterer Bauraum einsparen, indem, je nach Abmessung des Getriebesteuergeräts einerseits und der Leistungselektronik andererseits, diese in die eine oder andere der Richtungen überlappend angeordnet werden.

Eine weitere außerordentlich günstige Ausgestaltung sieht es ferner vor, dass eine Platine eines Inverters der Leistungselektronik in der Hochrichtung benachbart und in der Längsrichtung parallel zu einer Platine des Getriebesteuergeräts angeordnet ist. Diese Anordnung mit benachbarten Platinen, welche gemäß einer außerordentlich günstigen Weiterbildung dieser Idee in der Längsrichtung weniger als 20 mm beabstandet sind und bevorzugt sogar in der Hochrichtung fluchtend angeordnet sind, schafft eine sehr effiziente Nutzung des Bauraums in der Längsrichtung, indem diese beiden Platinen vorzugsweise direkt aneinander anschließend beispielsweise in einem gemeinsamen Bauraum für die Steuerung, welcher bevorzugt offen innerhalb eines Getriebegehäuses des Hybridgetriebes liegt, angeordnet sind.

Die elektrische Maschine ist dabei, wie oben bereits erwähnt, so ausgebildet, dass die Rotordrehachse parallel zur Getriebeeingangswelle, also in der Querrichtung des Aufbaus verläuft. Gemäß einer sehr vorteilhaften Weiterbildung ist sie in Längsrichtung zwischen der Getriebeeingangswelle und der Leistungselektronik angeordnet, wobei, wie oben bereits angedeutet, gemäß einer vorteilhaften Ausgestaltung die elektrische Maschine in Längsrichtung benachbart zu zumindest einem Teil der Leistungselektronik angeordnet ist, wobei dieser Teil zumindest die Platine umfasst, während ein weiterer Teil in Längsrichtung verlaufend angeordnet sein kann. Dieser umfasst beispielsweise einen Anschlussstecker für den Gleichspannungsanschluss und einen Zwischenkreiskondensator, um nur einige bevorzugte Elemente für die Anordnung in diesem Bereich zu nennen.

Ein Wechselstromanschluss, welcher die elektrische Maschine und die Leistungselektronik miteinander verbindet, ist dabei gemäß einer sehr vorteilhaften Weiterbildung des erfindungsgemäßen Hybridgetriebes in der Hochrichtung unterhalb der Rotordrehachse angeordnet. Er kann im bestimmungsgemäßen Einsatz unten an der Platine des Inverters einerseits und der elektrischen Maschine andererseits angeordnet werden, sodass die restliche Platine des Inverters sich in der Hochrichtung nach oben und damit in der Längsrichtung neben der elektrischen Maschine erstreckt.

Ein Gleichstromanschluss für die Leistungselektronik ist in Hochrichtung oberhalb der Rotordrehachse und in Längsrichtung zwischen der Drehachse des Differentialeingangszahnrads und der Rotordrehachse angeordnet. Insbesondere bei einem Quereinbau des Hybridgetriebes in einem Fahrzeug, bei welchem die hier als Querrichtung definierte Richtung der Querrichtung des Fahrzeugs, die Längsrichtung der Längsrichtung des Fahrzeugs und die Hochrichtung einer Hochrichtung des Fahrzeugs entspricht, kann dies von entscheidendem Vorteil sein, da der Gleichstromanschluss so aus dem Frontbereich des Fahrzeugs zurück verlagert wird und somit für den Fall eines eventuellen Unfalls in einem relativ gut geschützten Bereich liegt. Der Gleichstromanschluss ist typischerweise an dem Getriebegehäuse des Getriebes, welches zumindest die Leistungselektronik, das Getriebesteuergerät, die hydraulische Getriebesteuerung und den Radsatz aufnimmt, angeordnet. Hierdurch ist sie in einem relativ sicheren Bereich für den potenziellen Crashfall angeordnet.

Eine besonders vorteilhafte Weiterbildung des erfindungsgemäßen Hybridgetriebes sieht es außerdem vor, dass das Getriebegehäuse einen Deckel aufweist, welcher in der Längsrichtung auf der der Getriebeeingangswelle abgewandten Seite des Getriebesteuergeräts und der Leistungselektronik angeordnet ist. Die Leistungselektronik oder zumindest der wesentliche Teil mit der Platine des Inverters und das Getriebesteuergerät für die elektrische Steuerung des Radsatzes liegen also unter dem Deckel des Getriebegehäuses, welches ansonsten das Differentialeingangszahnrad, die Getriebeeingangswelle, die mindestens eine Vorgelegewelle, die elektrische Maschine und die hydraulische Getriebesteuerung mit umfasst. Durch diese Anordnung sind die Leistungselektronik und das Getriebesteuergerät relativ einfach zugänglich. Bei einem oben schon angesprochenen Quereinbau des Hybridgetriebes in einem Fahrzeug liegt dieser Deckel dann in Fahrtrichtung des Fahrzeugs, also in der Längsrichtung, vorne, sodass der Deckel von der Front des Fahrzeugs her zugänglich ist.

Weitere vorteilhafte Ausgestaltungen des erfindungsgemäßen Hybridgetriebes ergeben sich auch aus den Ausführungsbeispielen, welche nachfolgend unter Bezugnahme auf die Figuren näher beschrieben sind.

Dabei zeigen:
- Fig. 1: eine schematische Ansicht einer möglichen Ausführungsform eines erfindungsgemäßen Hybridgetriebes aus einer Blickrichtung quer zur Längsrichtung;
- Fig. 2: einen Antriebsstrang mit einem erfindungsgemäßen Hybridgetriebe in einer schematischen Ansicht senkrecht zur Querrichtung; und
- Fig. 3: eine alternative Ausgestaltung des erfindungsgemäßen Hybridgetriebes in einer Darstellung analog zu der in Fig. 1.

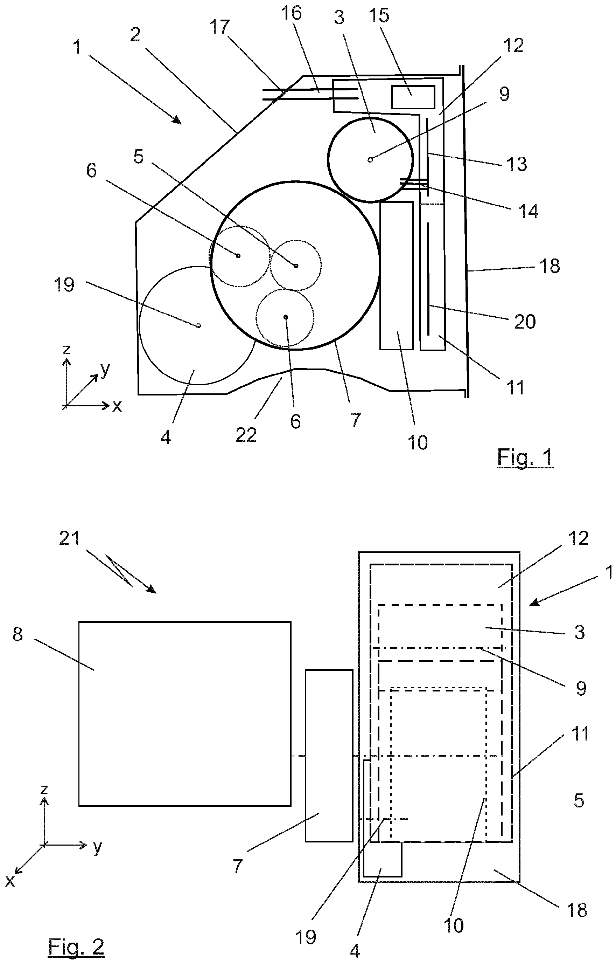

in der Darstellung der Figur 1 ist ein in seiner Gesamtheit mit 1 bezeichnetes Hybridgetriebe für ein hier nicht dargestelltes Fahrzeug zu erkennen. Dabei sind in der Darstellung der Figur 1 drei Richtungen schematisch eingezeichnet. Eine Längsrichtung x und eine Hochrichtung z spannen dabei die in Figur 1 dargestellte Zeichnungsebene auf. Senkrecht dazu steht, in die Zeichnungsebene hineinragend, eine Querrichtung y. In der Darstellung der Figur 2 ist der Aufbau zusammen mit weiteren Komponenten dabei nochmals gedreht zu erkennen, sodass hier die Längsrichtung x aus der Blattebene heraus verläuft und die Darstellungsebene durch die Querrichtung y und die Hochrichtung z aufgespannt wird.

Das Hybridgetriebe 1 befindet sich nun teilweise in einem mit 2 bezeichneten Getriebegehäuse. Das Hybridgetriebe 1 umfasst eine elektrische Maschine 3 sowie ein Differentialgetriebe, von welchem hier ein Differentialeingangszahnrad 4 dargestellt ist. Dieses befindet sich im Eingriff mit einem Getriebe, welches eine Getriebeeingangswelle 5 sowie in dem hier dargestellten Ausführungsbeispiel zwei Vorgelegewellen 6 umfasst. Mit dickerer Linie eingezeichnet und in der in Figur 2 dargestellten Querrichtung davor befindet sich eine mit 7 bezeichnete Kupplungseinrichtung. Diese Kupplungseinrichtung 7 ist für den in Figur 1 dargestellten Fall als Doppelkupplung ausgeführt, welche ergänzend eine Trennkupplung umfassen kann. Wie es später noch erläutert werden wird, wäre auch ein Aufbau mit einer Trennkupplung alleine denkbar.

Das hier nun dargestellte Doppelkupplungsgetriebe ist über die Kupplungseinrichtung 7, wie es in der Darstellung der Figur 2 erkennbar wird, mit einem Verbrennungsmotor 8 verbunden. Verbunden im Sinne der Erfindung bedeutet dabei im Allgemeinen, dass die Verbindung mittelbar ausgebildet ist, über eine hier nicht dargestellte Einrichtung zur Tilgung und Dämpfung von Drehschwingungen, beispielsweise einem Zweimassenschwungrad oder dergleichen. Durch die Verbindung der Kupplungseinrichtung 7 mit dem Verbrennungsmotor 8 ist es so, dass einerseits über den Verbrennungsmotor 8 und andererseits über die elektrische Maschine 3 mit ihrer Rotordrehachse 9 ein Antrieb des Differentialgetriebes und damit des Fahrzeugs über das Differentialeingangszahnrad 4 erfolgen kann. Die elektrische Maschine 3 ist dabei in einer sogenannten Side-by-Side Anordnung zu einem Radsatz des Hybridgetriebes 1 angeordnet.

Mit der Side-by-Side-Anordnung der elektrischen Maschine 3 ist gemeint, dass die Rotordrehachse 9 achsparallel und versetzt zu der Getriebeeingangswelle 5 und auch jeweils achsparallel und versetzt zu den Vorgelegewellen 6 angeordnet ist. Die elektrische Maschine 3 kann beispielsweise über eine hier nicht eingezeichnete Stirnradpaarung oder auch über einen Kettentrieb mit einem Zahnrad bzw. einer Verzahnung des Hybridgetriebes 1 gekoppelt sein. Diese Verzahnung kann beispielsweise eine Außenverzahnung auf einem Lamellenträger der Kupplungseinrichtung sein oder auch ein Zahnrad im Radsatz des Getriebes, sodass die elektrische Maschine 4 ihre Kraft beispielsweise an die Getriebeeingangswelle oder insbesondere an eine der Vorgelegewellen 6 abgeben kann.

In der Längsrichtung x, welche vorzugsweise auch die Fahrzeuglängsrichtung ist, sodass das Hybridgetriebe also quer zur Fahrzeuglängsrichtung bzw. Fahrtrichtung in dem Fahrzeug eingebaut ist, befindet sich benachbart zu der Getriebeeingangswelle 5 eine hydraulische Getriebesteuerung 10 sowie im Weiteren benachbart ein Getriebesteuergerät 11, welches die elektrische Steuerung des Radsatzes des Hybridgetriebes 1 übernimmt. Zur Steuerung der elektrischen Maschine 3 ist in der Hochrichtung z oberhalb und benachbart zu dem Getriebesteuergerät 11 eine Leistungselektronik 12 angeordnet. Diese umfasst zumindest eine mit 13 bezeichnete Platine eines Inverters, welche über einen dreiphasigen Wechselstromanschluss 14 mit der elektrischen Maschine 3 verbunden ist. Außerdem ist schematisch in der Leistungselektronik 12 ein Zwischenkreiskondensator 15 eingezeichnet. Über einen Gleichstromanschluss 16, welcher aus dem Getriebegehäuse 2 in einem mit 17 bezeichneten Bereich herausgeführt ist, wird die Leistungselektronik 12 und damit letztlich die elektrische Maschine 3 mit einer hier nicht dargestellten Traktionsbatterie des mit dem Hybridgetriebe 1 ausgestatteten Fahrzeugs verbunden.

Das Getriebegehäuse 2 weist in der Längsrichtung x in der Darstellung der Figur 1 rechts einen Gehäusedeckel 18 auf, welcher vorzugsweise in Fahrtrichtung vorne angeordnet ist. Dies macht den Aufbau hinsichtlich der Leistungselektronik 12 und des Getriebesteuergeräts 11 gut zugänglich, während der Gleichstromanschluss 16, welcher in dem mit 17 bezeichneten Bereich aus dem Getriebegehäuse 2 herausgeführt wird, entsprechend nach hinten verlagert ist, um im Falle eines Crashs eines mit dem Hybridgetriebe 1 ausgestatteten Fahrzeugs eine möglichst hohe Sicherheit zu bieten.

Da dieser Bereich 17 zur Realisierung des Gleichstromanschlusses am Gehäuse 2 in der Längsrichtung x zwischen der Rotorachse 9 der elektrischen Maschine 3 und einer Drehachse 19 des Differentialeingangszahnrads 4 liegt und damit in der Längsrichtung x sowohl von der Front des Getriebegehäuses 2 mit ihrem Deckel 18 als auch von der gegenüberliegenden Seite soweit entfernt, ist im Crashfall eine hohe Sicherheit gewährleistet ist.

Die Leistungselektronik 12 umfasst dabei im Wesentlichen einen primären Teilabschnitt mit der Platine 13 des Inverters, welcher in der Längsrichtung x zwischen dem Deckel 18 und der elektrischen Maschine 3 angeordnet ist, sodass die Anordnung des Wechselstromanschlusses unterhalb der Rotordrehachse 9 der elektrischen Maschine 3 dafür sorgt, dass der Bauraum neben der elektrischen Maschine 3 ideal ausgenutzt wird. Ein weiterer Teil, z.B. mit dem Gleichstromanschluss 16 und dem Zwischenkreiskondensator 15, der Leistungselektronik 12 kann sich in der Längsrichtung x erstrecken und ist in Richtung der Hochrichtung z benachbart zur elektrischen Maschine angeordnet, sodass diese von der Leistungselektronik 12 also teilweise umschlossen wird. Überlappend zu der elektrischen Maschine 3 zwischen dem Getriebesteuergerät 11 und dem Radsatz mit seiner Eingangswelle 5 und den Vorgelegewellen 6 ist dabei die hydraulische Getriebesteuerung 10 angeordnet, sodass diese unmittelbar mit den entsprechenden Bauteilen innerhalb des Getriebes zusammenwirken kann, was den Aufbau ebenfalls kompakt und hinsichtlich der benötigten Leitungslängen sehr effizient macht.

Eine Platine 20 des Getriebesteuergeräts 11 ist dabei in Hochrichtung Z benachbart und in Längsrichtung x parallel zu der Platine 13 des Inverters angeordnet. In Längsrichtung x sollten diese vorzugsweise weniger als 20 mm Abstand aufweisen. Idealerweise sind sie entlang der Hochrichtung z fluchtend hintereinander angeordnet.

In der Darstellung der Figur 2 mit Blick auf den Deckel 18 des Getriebegehäuses 2 ist nun zu erkennen, dass innerhalb des Getriebegehäuses das Differentialeingangszahnrad 4, die Vorgelegewellen 6, welche hier nicht dargestellt sind, und die Getriebeeingangswelle 5 angeordnet sind, ebenso wie die elektrische Maschine 3 und die hydraulische Getriebesteuerung 10 sowie die Kombination aus dem Getriebesteuergerät 11 unten und der Leistungselektronik 12 diese überlagernd oben. Eine Kurbelwelle des Verbrennungsmotors 8 treibt in diesem Szenario mittelbar in die Kupplungseinrichtung 7, welche hier als Doppelkupplung ausgebildet sein kann. Alles in allem lässt sich der Aufbau außerordentlich kompakt, vor allem in der Querrichtung Y, also entlang der Hauptachsen des Getriebes wie beispielsweise der Getriebeeingangswelle 5, realisieren. Der Aufbau kann dementsprechend quer zur Fahrtrichtung in das Fahrzeug eingebaut werden, sodass die schematische Darstellung der Figur 2 im Wesentlichen einer Blickrichtung auf die Front eines mit dem dort gezeigten Antriebsstrang 21 ausgestatten Fahrzeugs entspräche.

Dabei ist es so, dass in dem Getriebegehäuse 2 noch ausreichend Bauraum verbleibt, um die Außenkontur dieses Getriebegehäuses 2 an weitere in dem Fahrzeug benötigte Bauteile und Strukturen anzupassen. So ist in der Darstellung der Figur 1 beispielsweise in dem in Hochrichtung z unteren Teil des Getriebegehäuses 2 eine optionale mit 22 bezeichnete Ausnehmung zu erkennen, in deren Bereich außerhalb des Getriebegehäuses 2 besonders bevorzugt Komponenten der Lenkung des Fahrzeugs angeordnet sein könnten. Die optionale Ausnehmung 22 ist vorteilhaft in Längsrichtung x gesehen zwischen der Drehachse 19 des Differentialeingangszahnrads 4 und dem Getriebesteuergerät 11 angeordnet.

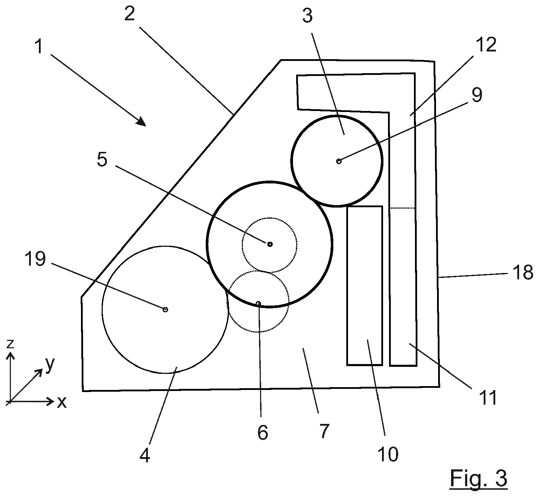

In der Darstellung der Figur 3 ist das Getriebegehäuse 2 nochmals dargestellt. Die optionale Ausnehmung 22 ist hier nicht vorhanden, der Deckel 18 des Getriebegehäuses 2 ist anders als in der Darstellung der Figur 1 nicht explizit dargestellt. Ansonsten soll der in Figur 1 dargestellte Aufbau weitgehend dem in Figur 3 dargestellten Aufbau entsprechen. Auch hier ist das Differentialeingangszahnrad 4 mit seiner Drehachse 19 erkennbar, ebenso wie die elektrische Maschine 3 mit ihrer Rotorachse 9. Eine hydraulische Getriebesteuerung 10 ist dargestellt und in Längsrichtung x benachbart dazu ist das Getriebesteuergerät 11 angeordnet, wobei auf die explizite Darstellung der Platine 20 verzichtet worden ist. Darüber befindet sich die Leistungselektronik 12, wobei auch hier auf, die Platine des Inverters, elektrische Anschlüsse und Details in der Darstellung verzichtet worden ist.

Der primäre Unterschied liegt nun darin, dass die Kupplungseinrichtung 7 hier als reine Trennkupplung ausgebildet ist. Anders als bei dem Aufbau in der Darstellung der Figur 1 wird also kein Doppelkupplungsgetriebe mit zwei Vorgelegewellen 6 angesteuert, sondern ein einfaches Hybridgetriebe mit einem modifizierten Radsatz mit einer Eingangswelle 5 und einer einzigen Vorgelegewelle 6, über welche das Differentialeingangszahnrad 4 entsprechend angetrieben wird. Der Aufbau könnte beispielsweise in Form eines simplen automatisierten Schaltgetriebes realisiert sein, welches mit der elektrischen Maschine 3 entsprechend hybridisiert ist. Diese ist in der oben schon beschriebenen Side-by-Side Anordnung zu dem modifizierten Radsatz in dem Hybridgetriebe 1 angeordnet. Der entscheidende Aufbau der integrierten Steuerung mit der Leistungselektronik 12 und dem Getriebesteuergerät 11 ist identisch zu dem zuvor beschriebenen Ausführungsbeispiel.

## Patentansprüche

1. Hybridgetriebe (1) für ein Fahrzeug, mit
- einer in eine Querrichtung (y) verlaufende Getriebeeingangswelle (5),
- zumindest einer parallel zu der Getriebeeingangswelle (5) angeordneten Vorgelegewelle (6),
- einer koaxial zu der Getriebeeingangswelle (5) angeordneten Kupplungseinrichtung (7), welche wenigstens eine Kupplung aufweist,
- einem Differentialgetriebe, welches ein Differentialeingangszahnrad (4) aufweist,
wobei eine Drehachse (19) des Differentialeingangszahnrads parallel zu der Getriebeeingangswelle (5) angeordnet ist,
- einer elektrischen Maschine (3), welche einen Rotor und einen Stator aufweist, wobei eine Rotordrehachse (9) parallel zu der Getriebeeingangswelle (5) angeordnet ist,
- einem Getriebesteuergerät (11), wobei
- in einer Längsrichtung (x) gesehen, welche senkrecht zu der Querrichtung (y) angeordnet ist, das Differentialeingangszahnrad (4), die Getriebeeingangswelle (5) und eine das Getriebesteuergerät (11) umfassende Getriebesteuerung in der genannten Reihenfolge nacheinander angeordnet sind,
wobei in einer Hochrichtung (z), welche senkrecht zu der Querrichtung (y) und senkrecht zu der Längsrichtung (x) angeordnet ist, zumindest ein Teil einer Leistungselektronik (12) für die elektrische Maschine (3) benachbart zu dem Getriebesteuergerät (11) angeordnet ist
wobei die elektrische Maschine (3) in der Hochrichtung (z) benachbart und oberhalb einer hydraulischen Getriebesteuerung (10) und in Längsrichtung (x) überlappend zu dieser angeordnet ist,
**dadurch gekennzeichnet, dass**
ein weiterer Teil der Leistungselektronik (12) sich in der Längsrichtung (x) erstreckt und in der Hochrichtung (z) oberhalb der elektrischen Maschine (3) angeordnet ist.

2. Hybridgetriebe (1) nach Anspruch 1,
**dadurch gekennzeichnet, dass**
der benachbart zu dem Getriebesteuergerät (11) angeordnete zumindest eine Teil der Leistungselektronik (12) im bestimmungsgemäßen Einsatz oberhalb des Getriebesteuergeräts (11) angeordnet ist.

3. Hybridgetriebe (1) nach Anspruch 1 oder 2,
**dadurch gekennzeichnet, dass**
die Leistungselektronik (12) in der Längsrichtung (x) und/oder in der Querrichtung (y) zumindest teilweise überlappend zu dem Getriebesteuergerät (11) angeordnet ist.

4. Hybridgetriebe (1) nach einem der Ansprüche 1 bis 3,
**dadurch gekennzeichnet, dass**
eine Platine (13) eines Inverters der Leistungselektronik (12) in der Hochrichtung (z) benachbart und in der Längsrichtung (x) parallel zu einer Platine (20) des Getriebesteuergeräts (11) angeordnet ist.

5. Hybridgetriebe (1) nach Anspruch 4,
**dadurch gekennzeichnet, dass**
die Platine (13) des Inverters der Leistungselektronik (12) weniger als 20 mm beabstandet, in der Hochrichtung (z) fluchtend, zu der Platine (20) des Getriebesteuergeräts (11) angeordnet ist.

6. Hybridgetriebe (1) nach einem der Ansprüche 1 bis 5,
**dadurch gekennzeichnet, dass**
eine Rotordrehachse (9) der elektrischen Maschine in Längsrichtung (x) zwischen der Getriebeeingangswelle (5) und zumindest einem Teil der Leistungselektronik (12) angeordnet ist.

7. Hybridgetriebe (1) nach einem der Ansprüche 1 bis 6,
**dadurch gekennzeichnet, dass**
die elektrische Maschine (3) in der Längsrichtung (x) benachbart zu zumindest einem Teil der Leistungselektronik (12) angeordnet ist.

8. Hybridgetriebe (1) nach Anspruch 6,
**dadurch gekennzeichnet, dass**
ein Wechselstromanschluss (14), welcher die elektrische Maschine (3) und die Leistungselektronik (12) verbindet, in der Hochrichtung (z) unterhalb der Rotordrehachse (9) angeordnet ist.

9. Hybridgetriebe (1) nach einem der Ansprüche 1 bis 8,
**dadurch gekennzeichnet, dass**
ein Gleichstromanschluss (16) für die Leistungselektronik (12) in der Hochrichtung (z) oberhalb der Rotordrehachse (9) und in Längsrichtung (x) zwischen der Drehachse (19) des Differentialeingangszahnrads (4) und der Rotordrehachse (9) angeordnet ist.

10. Hybridgetriebe (1) nach einem der Ansprüche 1 bis 9,
**dadurch gekennzeichnet, dass**
ein Getriebegehäuse (2), welches zumindest das Differentialeingangszahnrad (4), die Getriebeeingangswelle (5), die mindestens eine Vorgelegewelle (6), die elektrische Maschine (3), das Getriebesteuergerät (11), die hydraulische Getriebesteuerung (10) und die Leistungselektronik (12) aufnimmt, einen Gehäusedeckel (18) umfasst, welcher in der Längsrichtung (x) auf der der Getriebeeingangswelle (5) abgewandten Seite des Getriebesteuergeräts (11) und zumindest eines Teils der Leistungselektronik (12) angeordnet ist.

11. Hybridgetriebe (1) nach einem der Ansprüche 1 bis 10,
**dadurch gekennzeichnet, dass**
die Querrichtung (y), die Längsrichtung (x) und die Hochrichtung (z) bei einem in ein Fahrzeug eingebautem Hybridgetriebe (1) in der genannten Reihenfolge der Fahrzeugquerrichtung, der Fahrzeuglängsrichtung und der Fahrzeughochrichtung entsprechen.

12. Hybridgetriebe (1) nach einem der Ansprüche 1 bis 11,
**dadurch gekennzeichnet, dass**
die Kupplungseinrichtung (7) eine Doppelkupplung und/oder eine Trennkupplung aufweist.

## Claims

1. Hybrid transmission (1) for a vehicle, having
- a transmission input shaft (5) extending in a transverse direction (y),
- at least one countershaft (6) arranged in parallel with the transmission input shaft (5),
- a clutch device (7) which is arranged coaxially with the transmission input shaft (5) and comprises at least one clutch,
- a differential which comprises a differential input gear (4),
wherein a rotational axis (19) of the differential input gear is arranged in parallel with the transmission input shaft (5),
- an electric machine (3) which comprises a rotor and a stator, wherein a rotor rotational axis (9) is arranged in parallel with the transmission input shaft (5),
- a transmission control device (11),
- the differential input gear (4), the transmission input shaft (5) and a transmission controller comprising the transmission control device (11) being arranged in succession in the specified sequence when viewed in a longitudinal direction (x) which is arranged perpendicularly to the transverse direction (y),
at least one part of a power electronics system (12) for the electric machine (3) being arranged adjacently to the transmission control device (11) in a vertical direction (z) which is arranged perpendicularly to the transverse direction (y) and perpendicularly to the longitudinal direction (x),
the electric machine (3) being arranged adjacently to and above a hydraulic transmission controller (10) in the vertical direction (z) and overlapping it in the longitudinal direction (x),
**characterized in that**
a further part of the power electronics system (12) extends in the longitudinal direction (x) and is arranged above the electric machine (3) in the vertical direction (z).

2. Hybrid transmission (1) according to claim 1,
**characterized in that**
the at least one part of the power electronics system (12) arranged adjacently to the transmission control device (11) is arranged above the transmission control device (11) when used as intended.

3. Hybrid transmission (1) according to either claim 1 or claim 2,
**characterized in that**
the power electronics system (12) is arranged at least partially overlapping the transmission control device (11) in the longitudinal direction (x) and/or in the transverse direction (y).

4. Hybrid transmission (1) according to any of claims 1 to 3,
**characterized in that**
a circuit board (13) of an inverter of the power electronics system (12) is arranged in the vertical direction (z) adjacently to and in the longitudinal direction (x) in parallel with a circuit board (20) of the transmission control device (11).

5. Hybrid transmission (1) according to claim 4,
**characterized in that**
the circuit board (13) of the inverter of the power electronics system (12) is spaced less than 20 mm from, and arranged in the vertical direction (z) flush with, the circuit board (20) of the transmission control device (11).

6. Hybrid transmission (1) according to any of claims 1 to 5,
**characterized in that**
a rotor rotational axis (9) of the electric machine is arranged in the longitudinal direction (x) between the transmission input shaft (5) and at least one part of the power electronics system (12).

7. Hybrid transmission (1) according to any of claims 1 to 6,
**characterized in that**
the electric machine (3) is arranged in the longitudinal direction (x) adjacently to at least one part of the power electronics system (12).

8. Hybrid transmission (1) according to claim 6,
**characterized in that**
an alternating current connection (14) which connects the electric machine (3) and the power electronics system (12) is arranged in the vertical direction (z) below the rotor rotational axis (9).

9. Hybrid transmission (1) according to any of claims 1 to 8,
**characterized in that**
a direct current connection (16) for the power electronics system (12) is arranged in the vertical direction (z) above the rotor rotational axis (9) and in the longitudinal direction (x) between the rotational axis (19) of the differential input gear (4) and the rotor rotational axis (9).

10. Hybrid transmission (1) according to any of claims 1 to 9,
**characterized in that**
a transmission housing (2), which accommodates at least the differential input gear (4), the transmission input shaft (5), the at least one countershaft (6), the electric machine (3), the transmission control device (11), the hydraulic transmission controller (10) and the power electronics system (12), has a housing cover (18) which is arranged in the longitudinal direction (x) on the side, facing away from the transmission input shaft (5), of the transmission control device (11) and of at least one part of the power electronics system (12).

11. Hybrid transmission (1) according to any of claims 1 to 10,
**characterized in that**
the transverse direction (y), the longitudinal direction (x) and the vertical direction (z) in the case of a hybrid transmission (1) installed in a vehicle correspond in the specified sequence to the vehicle transverse direction, the vehicle longitudinal direction, and the vehicle vertical direction.

12. Hybrid transmission (1) according to any of claims 1 to 11,
**characterized in that**
the clutch device (7) comprises a dual clutch and/or a disconnect clutch.

## Revendications

1. Boîte de vitesses hybride (1) pour un véhicule, comportant
- un arbre d'entrée de boîte de vitesses (5) s'étendant dans une direction transversale (y),
- au moins un arbre intermédiaire (6) disposé parallèlement à l'arbre d'entrée de boîte de vitesses (5),
- un dispositif d'embrayage (7) disposé de manière coaxiale par rapport à l'arbre d'entrée de boîte de vitesses (5) et présentant au moins un embrayage,
- un différentiel qui présente une roue dentée d'entrée de différentiel (4),
dans laquelle un axe de rotation (19) de la roue dentée d'entrée de différentiel est disposé parallèlement à l'arbre d'entrée de boîte de vitesses (5),
- une machine électrique (3) qui présente un rotor et un stator, dans laquelle un axe de rotation de rotor (9) est disposé parallèlement à l'arbre d'entrée de boîte de vitesses (5),
- un appareil de commande de boîte de vitesses (11), dans laquelle
- vus dans une direction longitudinale (x) disposée perpendiculairement à la direction transversale (y), la roue dentée d'entrée de différentiel (4), l'arbre d'entrée de boîte de vitesses (5) et une commande de boîte de vitesses comprenant l'appareil de commande de boîte de vitesses (11) sont disposés successivement dans l'ordre mentionné,
dans laquelle, dans une direction verticale (z) disposée perpendiculairement à la direction transversale (y) et perpendiculairement à la direction longitudinale (x), au moins une partie d'une électronique de puissance (12) pour la machine électrique (3) est disposée de manière adjacente à l'appareil de commande de boîte de vitesses (11)
dans laquelle la machine électrique (3) est disposée, dans la direction verticale (z), de manière adjacente à une commande de boîte de vitesses hydraulique (10) et au-dessus de celle-ci et de manière à chevaucher ladite commande dans la direction longitudinale (x),
**caractérisée en ce que**
une autre partie de l'électronique de puissance (12) s'étend dans la direction longitudinale (x) et est disposée au-dessus de la machine électrique (3) dans la direction verticale (z).

2. Boîte de vitesses hybride (1) selon la revendication 1,
**caractérisée en ce que**
l'au moins une partie de l'électronique de puissance (12) disposée de manière adjacente à l'appareil de commande de boîte de vitesses (11) est disposée au-dessus de l'appareil de commande de boîte de vitesses (11) lors de l'utilisation conforme.

3. Boîte de vitesses hybride (1) selon la revendication 1 ou 2,
**caractérisée en ce que**
l'électronique de puissance (12) est disposée, dans la direction longitudinale (x) et/ou dans la direction transversale (y), au moins partiellement de manière à chevaucher l'appareil de commande de boîte de vitesses (11).

4. Boîte de vitesses hybride (1) selon l'une des revendications 1 à 3,
**caractérisée en ce que**
une platine (13) d'un convertisseur de l'électronique de puissance (12) est disposée de manière adjacente à une platine (20) de l'appareil de commande de boîte de vitesses (11) dans la direction verticale (z) et parallèlement à ladite platine dans la direction longitudinale (x).

5. Boîte de vitesses hybride (1) selon la revendication 4,
**caractérisée en ce que**
la platine (13) du convertisseur de l'électronique de puissance (12) est espacée de moins de 20 mm, à fleur dans la direction verticale (z), de la platine (20) de l'appareil de commande de boîte de vitesses (11).

6. Boîte de vitesses hybride (1) selon l'une des revendications 1 à 5,
**caractérisée en ce que**
un axe de rotation de rotor (9) de la machine électrique est disposé, dans la direction longitudinale (x), entre l'arbre d'entrée de boîte de vitesses (5) et au moins une partie de l'électronique de puissance (12).

7. Boîte de vitesses hybride (1) selon l'une des revendications 1 à 6,
**caractérisée en ce que**
la machine électrique (3) est disposée, dans la direction longitudinale (x), de manière adjacente à au moins une partie de l'électronique de puissance (12).

8. Boîte de vitesses hybride (1) selon la revendication 6,
**caractérisée en ce que**
une connexion à courant alternatif (14) qui relie la machine électrique (3) et l'électronique de puissance (12) est disposée en dessous de l'axe de rotation de rotor (9) dans la direction verticale (z).

9. Boîte de vitesses hybride (1) selon l'une des revendications 1 à 8,
**caractérisée en ce que**
une connexion à courant continu (16) pour l'électronique de puissance (12) est disposée, dans la direction verticale (z), au-dessus de l'axe de rotation de rotor (9) et, dans la direction longitudinale (x), entre l'axe de rotation (19) de la roue dentée d'entrée de différentiel (4) et l'axe de rotation de rotor (9).

10. Boîte de vitesses hybride (1) selon l'une des revendications 1 à 9,
**caractérisée en ce que**
un carter de boîte de vitesses (2), lequel reçoit au moins la roue dentée d'entrée de différentiel (4), l'arbre d'entrée de boîte de vitesses (5), l'au moins un arbre intermédiaire (6), la machine électrique (3), l'appareil de commande de boîte de vitesses (11), la commande de boîte de vitesses hydraulique (10) et l'électronique de puissance (12), comprend un couvercle de carter (18) qui est disposé, dans la direction longitudinale (x), sur le côté de l'appareil de commande de boîte de vitesses (11) et d'au moins une partie de l'électronique de puissance (12), lequel côté est opposé à l'arbre d'entrée de boîte de vitesses (5).

11. Boîte de vitesses hybride (1) selon l'une des revendications 1 à 10,
**caractérisée en ce que**
la direction transversale (y), la direction longitudinale (x) et la direction verticale (z), dans le cas d'une boîte de vitesses hybride (1) montée dans un véhicule, correspondent, dans l'ordre mentionné, à la direction transversale de véhicule, à la direction longitudinale de véhicule et à la direction verticale de véhicule.

12. Boîte de vitesses hybride (1) selon l'une des revendications 1 à 11,
**caractérisée en ce que**
le dispositif d'embrayage (7) présente un embrayage double et/ou un embrayage de coupure.
